# EUROPÄISCHE PATENTSCHRIFT

(11) **EP 1 328 417 B1**
(45) Veröffentlichungstag und Bekanntmachung des Hinweises auf die Patenterteilung: **17.12.2003**
(21) Anmeldenummer: 02801882.8
(22) Anmeldetag: 07.10.2002
(51) Int. Cl.: B60J 7/14

(54) **HARDTOP-FAHRZEUGDACH MIT DREI STARREN DACHTEILEN**
HARD TOP VEHICLE ROOF COMPRISING THREE RIGID ROOF ELEMENTS
TOIT RIGIDE ET AMOVIBLE DE VEHICULE COMPRENANT TROIS PARTIES DE TOIT RIGIDES

(30) Priorität: 19.10.2001 DE 10151170
(43) Veröffentlichungstag der Anmeldung: 23.07.2003
(73) Patentinhaber: CTS Fahrzeug-Dachsysteme GmbH, 21079 Hamburg (DE)
(72) Erfinder: HALBWEISS, Thomas, 71686 Remseck (DE); HASSELGRUBER, Andreas, 71735 Eberdingen-Nussdorf (DE); MERTE, Jens, 57250 Netphen (DE); WAGNER, Tobias, 21149 Hamburg (DE)
(74) Vertreter: Müller, Gottfried
(86) Internationale Anmeldenummer: EP0211209
(87) Internationale Veröffentlichungsnummer: WO03035418

(56) Entgegenhaltungen:
- EP-A- 0 835 779
- EP-A- 0 949 103
- BE-A- 368 499
- DE-A- 19 913 033
- DE-C- 19 847 983
- US-A1- 2001 004 156

## Beschreibung

Die Erfindung bezieht sich auf ein Hardtop-Fahrzeugdach mit drei starren Dachteilen nach dem in DE 19 847 983 C offenbarten Oberbegriff des Anspruches 1.

Ein derartiges Fahrzeugdach, bestehend aus einem vorderen, einem mittleren und einem hinteren Dachteil, wird in der Druckschrift EP 0 835 779 A1 beschrieben. Das Hardtop ist zwischen einer den Fahrzeuginnenraum überdeckenden Schließposition und einer Ablageposition zu verstellen, in welcher die Dachteile in einem heckseitigen Stauraum abgelegt sind. Die drei Dachteile bilden eine kinematische Kette, wobei das hintere Dachteil schwenkbar mit der Fahrzeugkarosserie, das mittlere Dachteil schwenkbar mit dem hinteren Dachteil und das vordere Dachteil schwenkbar mit dem mittleren Dachteil verbunden ist. In Schließstellung liegen alle drei Dachteile in Fahrzeuglängsrichtung hintereinander und bilden eine gemeinsame Dachaußenhaut. In Ablagestellung sind die Dachteile als Dachteilpaket zusammen gefaltet, in welchem das hintere Dachteil zuunterst, das mittlere Dachteil zuoberst und das vordere Dachteil in der Mitte abgelegt sind. Zur Überführung von Schließ- in Ablageposition werden das vordere und das mittlere Dachteil gegensinnig zum hinteren Dachteil um ihre jeweiligen Drehachsen verschwenkt.

Da in der Ablagestellung das vordere Dachteil und das mittlere Dachteil gegensinnig abgelegt sind, entsteht auf Grund der gegenläufigen Bombierung dieser beiden Dachteile ein verhältnismäßig hohes und raumgreifendes Dachteilpaket, welches den in Ablagestellung frei verfügbaren Kofferraum einschränkt.

Der Erfindung liegt das Problem zugrunde, ein dreiteiliges Hardtop-Fahrzeugdach zu schaffen, welches in Ablageposition ein nur geringes Packungsvolumen beansprucht.

Dieses Problem wird erfindungsgemäß mit den Merkmalen des Anspruches 1 gelöst. Die Unteransprüche geben zweckmäßige Weiterbildungen an.

Bei der Überführung des Fahrzeugdaches zwischen Schließ- und Ablageposition sind die Relativbewegungen der Dachteile gegenüber angrenzenden Dachteilen als Schwenkbewegung sowie als Absenk- und Verschiebebewegung unter das jeweils benachbarte Dachteil ausgeführt. Das hintere, dem Fahrzeugheck benachbarte Dachteil ist schwenkbar mit der Fahrzeugkarosserie verbunden und führt im Wesentlichen eine ausschließlich rotatorische Drehbewegung in den Stauraum hinein bzw. aus dem Stauraum heraus aus. Das vordere Dachteil wird dagegen bei der Ablagebewegung unter das mittlere Dachteil geschoben; vorderes und mittleres Dachteil bilden ein Teil-Dachteilpaket und liegen in Ablageposition gleichsinnig wie in Schließposition mit ihrer Dachaußenseite nach oben, d. h. dem Stauraumboden abgewandt. Das hintere Dachteil ist dagegen gegenüber der Schließposition so weit verschwenkt, so dass in Ablageposition die Dachaußenseite des hinteren Dachteiles dem Stauraumboden zugewandt ist.

Da in Ablageposition das vordere und das mittlere Dachteil gleichsinnig und parallel übereinander liegend abgelegt sind, ist ein kompaktes Packungsvolumen zu erreichen. Die schwenkbare Anbindung des hinteren Dachteiles an der Fahrzeugkarosserie ist kinematisch mit geringem konstruktivem Aufwand zu bewerkstelligen.

Vorteilhaft ist das vordere Dachteil über eine Verstellkinematik mit dem mittleren Dachteil gekoppelt, wobei diese Verstellkinematik in einer besonders einfachen Ausgestaltung eine Viergelenkkinematik ist, die eine Absenkung des vorderen Dachteiles in eine Position parallel und unterhalb des mittleren Dachteiles ermöglicht. Weiterhin kann es vorteilhaft sein, das mittlere Dachteil schwenkbar an das hintere Dachteil zu koppeln; auch diese kinematische Anbindung zeichnet sich durch konstruktive Einfachheit aus.

Ein besonders kompaktes Ablagevolumen kann erreicht werden, wenn eine im hinteren Dachteil angeordnete Heckscheibe, welche zwischen seitlichen C-Säulen des hinteren Dachteiles liegt, beim Überführen in Ablageposition aus der Position zwischen den C-Säulen herausgelöst und unabhängig von den C-Säulen in den Stauraum abgesenkt wird, in welchem die Heckscheibe insbesondere eine aufrechte, d. h. im Wesentlichen vertikale Staulage einnimmt. Die C-Säulen werden - gegebenenfalls einschließlich oberer und unterer Querstreben zwischen den beiden seitlichen C-Säulen - zum Ablegen in den Stauraum hinein verschwenkt, wobei der zwischenliegende Bereich zwischen den C-Säulen offen ist und zumindest teilweise vom mittleren und/oder vorderen Dachteil eingenommen werden kann. Die Heckscheibe liegt in dieser Ausführung zweckmäßig zwischen dem Dachteilpaket und dem Fahrzeuginnenraum innerhalb des Stauraumes bzw. einer für die Aufnahme der Heckscheibe ausgebildeten Ausnehmung.

Der Stauraum ist von einem Stauraumdeckel zu verschließen, welcher vorteilhaft verstellbar an eine Heckklappe des Fahrzeuges angekoppelt ist, die den Kofferraum des Fahrzeuges überdeckt. Der Stauraumdeckel ist bevorzugt sowohl in Schließposition als auch bei der Überführung des Fahrzeugdaches zwischen Schließ- und Ablageposition in eine Stellung unterhalb der Heckklappe verschoben, wodurch ausreichender Platz für die Kinematik bzw. die Anbindung des Fahrzeugdaches an die Fahrzeugkarosserie in Schließstellung des Daches sowie ausreichend Raum für die Überführung des Fahrzeugdaches zwischen Schließ- und Ablageposition gewährleistet ist. Dagegen kann in der Ablageposition des Daches der Stauraumdeckel in seine Überdeckungslage ausgefahren werden, in welcher der Stauraumdeckel und die Heckklappe in einer gemeinsamen Deckelebene liegen.

Die Heckklappe wird bevorzugt zum Überführen des Fahrzeugdaches zwischen Schließ- und Ablageposition und auch zum Be- und Entladen des Fahrzeugkofferraumes in gleichsinniger Weise durch Anheben der hinteren, dem Fahrzeugheck benachbarten Ladekante geöffnet. Insbesondere in Kombination mit dem an der Heckklappe beweglich gehaltenen Stauraumdeckel, der zum Überführen des Daches zwischen Schließ- und Ablageposition in eine Relativlage unterhalb der Heckklappe verfahren wird, wird dadurch ausreichender Platz für die Überführungsbewegung geschaffen.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung eine Seitenansicht auf ein dreiteiliges Hardtop-Fahrzeugdach in Schließstellung,
- Fig. 2: das Hardtop-Fahrzeugdach in einer Zwischenlage zwischen Schließ- und Ablageposition,
- Fig. 3: das Hardtop-Fahrzeugdach in Ablageposition, in welcher die Dachteile in einem heckseitigen Stauraum abgelegt sind.

In den folgenden Figuren sind gleiche Bauteile mit gleichen Bezugszeichen versehen.

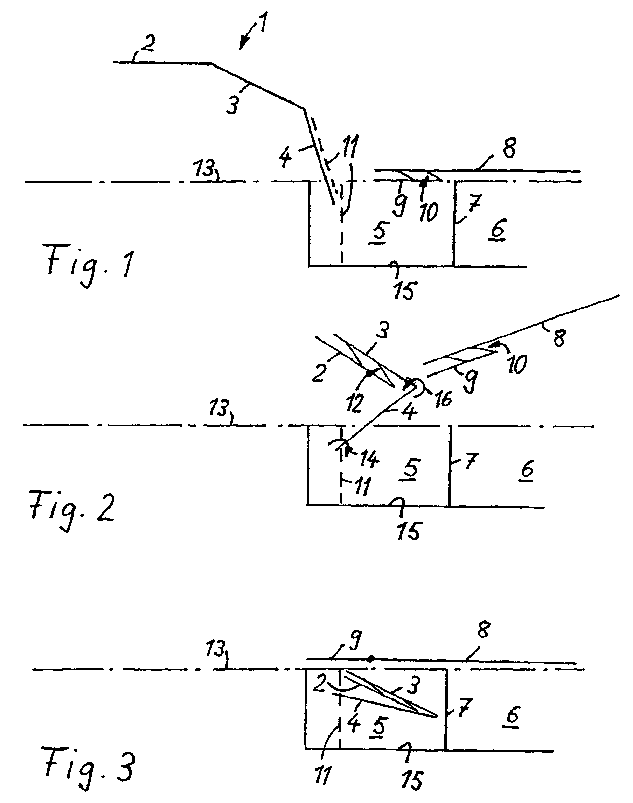

Bei dem in Fig. 1 in Schließposition dargestellten Fahrzeugdach 1 handelt es sich um ein dreiteiliges Hardtop mit einem vorderen Dachteil 2, einem mittleren Dachteil 3 sowie einem hinteren Dachteil 4. Alle drei Dachteile 2, 3 und 4 sind in sich starr ausgebildet. Das Hardtop-Fahrzeugdach 1 ist zwischen der in Fig. 1 dargestellten Schließposition, in welcher ein Fahrzeuginnenraum überdeckt ist und einer in Fig. 3 dargestellten Ablageposition zu verstellen, in welcher das Fahrzeugdach in einem heckseitigen Stauraum 5 abgelegt ist. Der Stauraum 5 ist über eine Trennwand 7 von einem dahinter liegenden Kofferraum 6 abgeteilt; gegebenenfalls kann auf die Trennwand 7 auch verzichtet werden, so dass Stauraum 5 und Kofferraum 6 einen gemeinsamen Heckraum bilden.

Des Weiteren ist eine Heckklappe 8 vorgesehen, welche in ihrer Schließstellung den Kofferraum 6 überdeckt. An der Heckklappe 8 ist mittels einer Deckelkinematik 10 ein Stauraumdeckel 9 verstellbar gehalten. Der Stauraumdeckel 9 ist zwischen der in Fig. 1 und Fig. 2 dargestellten Position parallel unterhalb der Heckklappe 8 und der in Fig. 3 dargestellten Position zu verstellen, in der die Heckklappe 8 und der Stauraumdeckel 9 in einer gemeinsamen Deckelebene liegen und der Stauraum vollständig abgedeckt ist. Die Deckelkinematik 10 ist beispielsweise als Viergelenkkinematik ausgeführt.

Das hintere Dachteil 4 ist schwenkbar mit der Fahrzeugkarosserie, welche über die strichpunktierte Linie 13 angedeutet ist, die zugleich die Gürtellinie des Fahrzeuges darstellt, gekoppelt. Bei der Überführung zwischen Schließ- und Ablageposition wird das hintere Dachteil 4 entsprechend der in Fig. 2 dargestellten Pfeilrichtung 14 verschwenkt, bis die Ablagesituation wie in Fig. 3 dargestellt erreicht ist, in welcher die Dachaußenseite des hinteren Dachteiles 4 dem Stauraumboden 15 zugewandt ist; die Dachaußenseite des hinteren Dachteiles 4 liegt hierbei näherungsweise parallel zum Stauraumboden 15. Das mittlere Dachteil 3 ist schwenkbeweglich mit dem hinteren Dachteil 4 gekoppelt und führt während der Überführungsbewegung in den Stauraum 5 hinein gemäß Pfeilrichtung 16 eine Relativschwenkbewegung gegenüber dem hinteren Dachteil 4 aus, wobei diese Relativschwenkbewegung gegensinnig zur Ablage-Schwenkbewegung des hinteren Dachteiles 4 gemäß Pfeilrichtung 14 gerichtet ist.

Das vordere Dachteil 2 ist über eine Verstellkinematik 12 mit dem mittleren Dachteil 3 gekoppelt. Die Verstellkinematik 12 erlaubt eine Absenk- und Verschiebebewegung des vorderen Dachteiles 2 gegenüber dem mittleren Dachteil 3 in eine Position parallel und unterhalb des mittleren Dachteiles. Die endgültige Relativposition unterhalb des mittleren Dachteiles wird in Ablagestellung gemäß Fig. 3 erreicht, in welcher beide Dachteile 2 und 3 übereinander liegend gestapelt sind und die Dachaußenseiten beider Dachteile 2 und 3 dem Stauraumboden 15 abgewandt sind. In der Ablageposition gemäß Fig. 3 bilden alle drei Dachteile 2, 3 und 4 ein Dachteilpaket und sind im Wesentlichen parallel zueinander verstaut. Das hintere Dachteil 4 liegt hierbei zuunterst, das mittlere Dachteil 3 zuoberst und das vordere Dachteil 2 in der Mitte zwischen hinterem und mittlerem Dachteil. Die Verstellkinematik 12 ist beispielsweise als Viergelenkkinematik ausgeführt; denkbar sind aber auch alternative Kinematiken, beispielsweise eine Schiebeführung.

In das hintere Dachteil 4 ist eine Heckscheibe 11 integriert, welche zwischen seitlichen C-Säulen des hinteren Dachteils gehalten ist. Zweckmäßig ist der Heckscheibe 11 eine separate Stellkinematik zugeordnet, welche unabhängig von der Dachkinematik eine Relativ-Absenkbewegung der Heckscheibe aus dem hinteren Dachteil 4 heraus ermöglicht. Die Heckscheibe 11 kann hierbei in den Stauraum 5 abgesenkt werden und nimmt dort eine im Wesentlichen vertikale bzw. aufrechte Staulage ein. In Ablageposition des Fahrzeugdaches befindet sich die Heckscheibe 11 in einer Position zwischen dem Dachteilpaket im Stauraum 5 und dem Fahrzeuginnenraum. Das Herauslösen der Heckscheibe 11 aus dem hinteren Dachteil 4 ermöglicht ein kompakteres Ablagemaß des Dachteilpaketes, da der Raum zwischen den seitlichen C-Säulen in Ablageposition zum Verstauen von mittlerem Dachteil 3 bzw. vorderem Dachteil 2 genutzt werden kann.

Bei der Überführungsbewegung des Fahrzeugdaches 1 von Schließposition in die Ablageposition wird zunächst die Heckscheibe 11 in den Stauraum 5 abgesenkt; während der Absenkbewegung der Heckscheibe behalten die C-Säulen ihre Schließposition bei. Anschließend wird die Heckklappe 8 einschließlich dem darunter liegenden Stauraumdeckel 9 angehoben, um einen Durchtritt für die Überführung des Fahrzeugdaches zu schaffen. Beim Anheben der Heckklappe 9 führt diese vorteilhaft eine gemischt rotatorisch-translatorische Bewegung aus, bei der sowohl die Hinterkante als auch die vordere Kante der Heckklappe angehoben wird, wenngleich in Offenstellung der Heckklappe die Hinterkante höher aufgestellt ist als die vordere Kante. Zeitgleich mit der Anhebung der Heckklappe wird die Ablagebewegung des Fahrzeugdaches eingeleitet.

## Patentansprüche

1. Hardtop-Fahrzeugdach mit drei starren Dachteilen (2, 3, 4), die zwischen einer den Fahrzeuginnenraum überdeckenden Schließposition und einer den Fahrzeuginnenraum freigebenden Ablageposition verstellbar sind, wobei das dem Fahrzeugheck zugewandte, hintere Dachteil (4) schwenkbar an die Fahrzeugkarosserie gekoppelt ist, und in Ablageposition die drei Dachteile (2, 3, 4) ein übereinanderliegendes, gestapeltes Dachteilpaket bilden, in welchem das hintere Dachteil (4) zuunterst, das mittlere Dachteil (3) zuoberst und das vordere Dachteil (2) zwischen hinterem und mittlerem Dachteil (4 bzw. 3) in einem heckseitigen Stauraum (5) abgelegt sind,
**dadurch gekennzeichnet,**
**dass** das vordere Dachteil (2) in Ablageposition unter das mittlere Dachteil (3) geschoben ist, wobei das vordere Dachteil (2) und das mittlere Dachteil (3) in Ablageposition parallel und gleichsinnig wie in Schließposition mit nach oben weisender, dem Stauraumboden (15) abgewandter Dachaußenseite und das hintere Dachteil (4) gegensinnig zur Schließposition mit dem Stauraumboden (15) zugewandter Dachaußenseite abgelegt sind.

2. Hardtop-Fahrzeugdach nach Anspruch 1,
**dadurch gekennzeichnet,**
**dass** das vordere Dachteil (2) über eine Verstellkinematik (12) mit dem mittleren Dachteil (3) gekoppelt ist.

3. Hardtop-Fahrzeugdach nach Anspruch 1 oder 2,
**dadurch gekennzeichnet,**
**dass** das mittlere Dachteil (3) schwenkbar mit dem hinteren Dachteil (4) verbunden ist.

4. Hardtop-Fahrzeugdach nach einem der Ansprüche 1 bis 3,
**dadurch gekennzeichnet,**
**dass** das hintere Dachteil (4) seitliche C-Säulen und eine zwischenliegende Heckscheibe (11) umfasst, die bei der Überführung in Ablagestellung mittels einer separaten, ihr zugeordneten Verstellkinematik aus ihrer Position zwischen den C-Säulen zu lösen und in eine im Wesentlichen vertikale Staulage im Stauraum (5) zu verbringen ist.

5. Hardtop-Fahrzeugdach nach Anspruch 4,
**dadurch gekennzeichnet,**
**dass** die Heckscheibe (11) in Ablageposition zwischen dem abgelegten Dachteilpaket und dem Fahrzeuginnenraum liegt.

6. Hardtop-Fahrzeugdach nach einem der Ansprüche 1 bis 5,
**dadurch gekennzeichnet,**
**dass** der Stauraum (5) von einem Stauraumdeckel (9) zu verschließen ist, der verstellbar an eine Heckklappe (8) angekoppelt ist.

7. Hardtop-Fahrzeugdach nach Anspruch 6,
**dadurch gekennzeichnet,**
**dass** der Stauraumdeckel (9) in Schließposition des Fahrzeugdaches (1) und bei der Überführung des Fahrzeugdaches (1) zwischen Schließ- und Ablageposition unter die Heckklappe (8) geschoben ist.

8. Hardtop-Fahrzeugdach nach Anspruch 7,
**dadurch gekennzeichnet,**
**dass** der Stauraumdeckel (9) über eine Viergelenkkinematik (10) mit der Heckklappe (8) verbunden ist.

9. Hardtop-Fahrzeugdach nach einem der Ansprüche 1 bis 8,
**dadurch gekennzeichnet,**
**dass** die Heckklappe (8) zum Überführen des Fahrzeugdaches zwischen Schließ- und Ablageposition und zum Be- und Entladen des Fahrzeugkofferraumes in gleichsinniger Weise zu öffnen ist.

## Claims

1. Hard top vehicle roof having three rigid roof parts (2, 3, 4) which can be adjusted between a closed position covering the vehicle interior and a deposited position opening up the vehicle interior, the rear roof part (4) which faces the vehicle rear being coupled pivotably to the vehicle body, and, in the deposited position, the three roof parts (2, 3, 4) forming a stacked assembly of roof parts lying one above another, in which the rear roof part (4) is deposited lowermost in a rear storage space (5), the central roof part (3) is deposited uppermost and the front roof part (2) is deposited between the rear and central roof parts (4 and 3, respectively), **characterized in that** the front roof part (2) is pushed into a deposited position below the central roof part (3), the front roof part (2) and the central roof part (3) being deposited in the deposited position in parallel and in the same direction as in the closed position with the roof outside pointing upwards and facing away from the storage-compartment floor (15), and the rear roof part (4) being deposited in the opposite direction to the closed position with the roof outside facing the storage-compartment floor (15).

2. Hard top vehicle roof according to Claim 1, **characterized in that** the front roof part (2) is coupled to the central roof part (3) via adjusting kinematics (12).

3. Hard top vehicle roof according to Claim 1 or 2, **characterized in that** the central roof part (3) is connected pivotably to the rear roof part (4).

4. Hard top vehicle roof according to one of Claims 1 to 3, **characterized in that** the rear roof part (4) comprises lateral C-pillars and a rear window (11) which lies in between and, during the transfer into the deposited position, can be released from its position between the C-pillars by means of a separate adjusting kinematics assigned to it and can be brought into an essentially vertical storage position in the storage compartment (5).

5. Hard top vehicle roof according to Claim 4, **characterized in that**, in the deposited position, the rear window (11) lies between the deposited assembly of roof parts and the vehicle interior.

6. Hard top vehicle roof according to one of Claims 1 to 5, **characterized in that** the storage compartment (5) can be closed by a storage-compartment lid (9) which is coupled in an adjustable manner to a tailgate (8).

7. Hard top vehicle roof according to Claim 6, **characterized in that**, in the closed position of the vehicle roof (1) and during the transfer of the vehicle roof (1) between the closed and deposited position, the storage-compartment lid (9) is pushed under the tailgate (8).

8. Hard top vehicle roof according to Claim 7, **characterized in that** the storage-compartment lid (9) is connected to the tailgate (8) via four-bar-linkage kinematics (10).

9. Hard top vehicle roof according to one of Claims 1 to 8, **characterized in that** the tailgate (8) can be opened in the same direction for transferring the vehicle roof between the closed and deposited position and for loading and unloading the vehicle luggage compartment.

## Revendications

1. Toit rigide et amovible de véhicule comprenant trois parties de toit rigides (2, 3, 4), qui peuvent être déplacées entre une position de fermeture recouvrant l'habitacle du véhicule et une position de rangement libérant l'habitacle du véhicule, la partie de toit arrière (4) tournée vers l'arrière du véhicule étant couplée de manière pivotante à la carrosserie du véhicule, et dans la position de rangement, les trois parties de toit (2, 3, 4) formant un ensemble de parties de toit empilé superposé dans lequel la partie de toit arrière (4) est rangée en dessous, la partie de toit centrale (3) est rangée au-dessus et la partie de toit avant (2) est rangée entre la partie de toit arrière et la partie de toit centrale (4, respectivement 3) dans un espace de rangement (5) du côté arrière,
**caractérisé en ce que**
la partie de toit avant (2) est poussée sous la partie de toit centrale (3) dans la position de rangement, la partie de toit avant (2) et la partie de toit centrale (3) étant rangées dans la position de rangement parallèlement et dans le même sens que dans la position de fermeture avec le côté extérieur du toit opposé au fond de l'espace de rangement (15) tourné vers le haut et la partie de toit arrière (4) étant rangée dans le sens opposé à la position de fermeture avec le côté extérieur du toit tourné vers le fond de l'espace de rangement (5).

2. Toit rigide et amovible de véhicule selon la revendication 1,
**caractérisé en ce que**
la partie de toit avant (2) est couplée par le biais d'une cinématique de réglage (12) à la partie de toit centrale (3).

3. Toit rigide et amovible de véhicule selon la revendication 1 ou 2,
**caractérisé en ce que**
la partie de toit centrale (3) est connectée de manière pivotante à la partie de toit arrière (4).

4. Toit rigide et amovible de véhicule selon l'une, quelconque des revendications 1 à 3,
**caractérisé en ce que**
la partie de toit arrière (4) comprend des colonnes C latérales et une vitre arrière (11) intermédiaire, qui, lors du passage dans la position de rangement, doit être sortie au moyen d'une cinématique de réglage séparée qui lui est propre, de sa position entre les colonnes C, et amenée dans une position de rangement essentiellement verticale dans l'espace de rangement (5).

5. Toit rigide et amovible de véhicule selon la revendication 4,
**caractérisé en ce que**
la vitre arrière (11) se trouve, dans la position de rangement, entre l'ensemble des parties de toit rangées et l'habitacle du véhicule.

6. Toit rigide et amovible de véhicule selon l'une quelconque des revendications 1 à 5,
**caractérisé en ce que**
l'espace de rangement (5) doit être fermé par un couvercle d'espace de rangement (9) qui est raccordé de manière réglable à une trappe arrière (8) .

7. Toit rigide et amovible de véhicule selon la revendication 6,
**caractérisé en ce que**
le couvercle de l'espace de rangement (9) dans la position de fermeture du toit du véhicule (1) et lors du passage du toit du véhicule (1) entre la position de fermeture et la position de rangement est poussé sous la trappe arrière (8).

8. Toit rigide et amovible de véhicule selon la revendication 7,
**caractérisé en ce que**
le couvercle de l'espace de rangement (9) est connecté par le biais d'une cinématique à quatre joints articulés (10) à la trappe arrière (8).

9. Toit rigide et amovible de véhicule selon l'une quelconque des revendications 1 à 8,
**caractérisé en ce que**
la trappe arrière (8) doit être ouverte dans le même sens pour le passage du toit du véhicule entre la position de fermeture et la position de rangement et pour le chargement et le déchargement du coffre à bagages du véhicule.
